# EUROPEAN PATENT APPLICATION

(11) **EP 2 469 632 A2**
(43) Date of publication of application: **27.06.2012**
(21) Application number: 11195795.7
(22) Date of filing: 27.12.2011
(51) Int. Cl.: H01M 4/86, H01M 4/92, H01M 8/04, H01M 8/06, H01M 8/10, H01M 4/88

(54) **Membrane electrode assembly, fuel cell with the same, and fuel cell generating system**

(30) Priority: 27.12.2010 JP 2010289097
(71) Applicant: Hitachi Ltd., Tokyo 100-8280 (JP)
(72) Inventor: Suzuki, Shuichi, Tokyo, 100-8220 (JP); Onuma, Atsuhiko, Tokyo, 100-8220 (JP); Kawaji, Jun, Tokyo, 100-8220 (JP); Takamori, Yoshiyuki, Tokyo, 100-8220 (JP); Andoh, Shinsuke, Tokyo, 100-8220 (JP); Mizukami, Takaaki, Tokyo, 100-8220 (JP)
(74) Representative: Beetz & Partner

(57) **Abstract**

A membrane electrode assembly for a fuel cell comprises a solid polymer electrolyte membrane (13), an anode being formed on one side of the solid polymer electrolyte membrane (13) and containing a catalyst and a solid polymer electrolyte, a cathode being formed on another side of the solid polymer electrolyte membrane (13) and containing a catalyst and a solid polymer electrolyte, an anode gas diffusion layer formed on one side of the anode, and a cathode gas diffusion layer formed on one side of the cathode. In addition, a formic acid oxidation electrode (16) containing palladium and a solid polymer electrolyte is formed between the anode gas diffusion layer and the anode.

## Description

### FIELD OF THE INVENTION

The present invention relates to a membrane electrode assembly, a fuel cell with the same, and a fuel cell generating system.

### BACKGROUND OF THE INVENTION

As recent electronic technologies progress, the amount of information increases and such increasing information is required to be processed more speedy and more functionally. Hence, needs are directed toward an electric source with a high output density and a high energy density, namely the electric source with a long continuous driving time.

Furthermore, the necessity of a small generator with electric chargeless, namely a micro-generator capable of supplying a fuel easily, is increasing. From such background, the importance of a fuel cell has been studied.

A fuel cell is one kind of an electric generator that includes at least a solid or liquid electrolyte and a pair of electrodes (anode and cathode) making an electrochemical reaction and converts chemical energy of a fuel directly into electrical energy with high efficiency.

The so-called polymer electrolyte fuel cell (PEFC) among such fuel cells includes a solid polymer electrolyte membrane as an electrolyte membrane and uses hydrogen as the fuel, and the so-called direct methanol fuel cell (DMFC) uses methanol as the fuel. Among them, The DMFC using a liquid fuel draws attention as an effective small electric source of a transportable or portable type since the fuel has a high volume energy density.

In a DMFC, methanol supplied to the anode is oxidized, turns into carbon dioxide, and is exhausted. More specifically, methanol transferred from the anode to the cathode through the solid polymer electrolyte is oxidized with oxygen supplied to the cathode, turns into carbon dioxide, and is exhausted. In such a methanol oxidation process, not some little formic acid is produced as an intermediate product and is discharged from the fuel cell. The formic acid is harmful to a human body and hence has to be reduced as little as possible.

As a method for removing formic acid as a harmful substance discharged from a fuel cell, for example, the proposed is a method of installing a filter having a byproduct gas absorbent in an exhaust gas pipe as described in JP-A No. 2008-210796. Further, another proposed is a method of installing a filter containing a catalyst for decomposing formic acid in an exhaust gas pipe as described in JP-A No. 2005-183014.

In the method of using the absorbent however, a capacity of the absorbent has itself limit and hence it is difficult to obtain the effect of removing formic acid for a long period of time. Then in the method of installing the catalytic filter in the exhaust gas pipe, since the filter acts as resistance to flow of the exhaust gas, a blower capacity has to be increased, the loss by an auxiliary power source increases, and hence the efficiency of a fuel cell system lowers.

In consideration of the above situation, the present invention intends to provide a membrane electrode assembly for a fuel cell and a fuel cell system capable of reducing the quantity of discharged formic acid for a long period of time without lowering the system efficiency of the fuel cell.

### SUMMARY OF THE INVENTION

A membrane electrode assembly for a fuel cell according to the present invention comprises a solid polymer electrolyte membrane, an anode being formed on one side of the solid polymer electrolyte membrane and containing a catalyst and a solid polymer electrolyte, a cathode being formed on another side of the solid polymer electrolyte membrane and containing a catalyst and a solid polymer electrolyte, an anode gas diffusion layer formed on one side of the anode so as to be across the anode from the solid polymer electrolyte membrane, and a cathode gas diffusion layer formed on one side of the cathode so as to be across the cathode from the solid polymer electrolyte membrane, wherein a formic acid oxidation electrode containing palladium and a solid polymer electrolyte is formed between the anode gas diffusion layer and the anode. Further, it is preferable that: the catalyst contained in the anode is one or more kinds selected from a group of platinum, ruthenium, iridium, rhodium, osmium, tungsten, molybdenum, iron, cobalt, nickel, and manganese; but the formic acid oxidation electrode does not contain the above-mentioned material namely platinum, ruthenium, iridium, rhodium, osmium, tungsten, molybdenum, iron, cobalt, nickel and manganese.

Further, it is preferable that the formic acid oxidation electrode includes palladium supported with a carbon support and a solid polymer electrolyte.

Further, the formic acid oxidation electrode may be formed between the cathode gas diffusion layer and the cathode.

Further, it is also possible to configure a fuel cell comprising such a membrane electrode assembly, a member for feeding a methanol aqueous solution to the anode, a member to feed air (oxygen) to the cathode, and a collecting member. In addition, it is possible to configure a fuel cell electric generation system on which a plurality of fuel cells is mounted.

The methanol aqueous solution is oxidized electrochemically at the anode, oxygen is reduced at the cathode, and electrical potential difference is generated between both of the electrodes (the anode and the cathode). Provided that a load as an external circuit is applied between both of the electrodes on this occasion, ions move in the electrolyte and an electrical energy is given to the external load.

The present invention makes it possible to provide a membrane electrode assembly for a fuel cell and a fuel cell system that can reduce the quantity of discharged formic acid for a long period of time without lowering system efficiency.

### BRIEF DESCRIPTION OF THE DRAWINGS

Fig. 1 is a schematic sectional view of amembrane electrode assembly for a fuel cell according to one embodiment of the present example.
Fig. 2 is a schematic sectional view of amembrane electrode assembly for a fuel cell according to the other embodiment of the present example.
Fig. 3 is an enlarged schematic sectional view of an interface between a formic acid oxidation electrode formed between an anode and an anode gas diffusion layer and the anode in a membrane electrode assembly for a fuel cell according to the present invention.
Fig. 4 is a schematic view showing procedures in forming the membrane electrode assembly for the fuel cell according to the embodiments of the present invention.
Fig. 5 is a schematic view showing procedures in forming the membrane electrode assembly for the fuel cell according to the embodiments of the present invention.
Fig. 6 is a schematic view showing procedures in forming a membrane electrode assembly for the fuel cell according to the embodiments of the present invention.
Fig. 7 is a schematic sectional view of a fuel cell according to one embodiment of the present example.
Fig. 8 is a schematic view of a personal digital assistant to which the fuel cell system of any one of the embodiments of the present invention is applied.

### DETAILED DESCRIPTION OF THE PREFERRED EMBODIMENTS

Embodiments according to the present invention are shown hereunder.

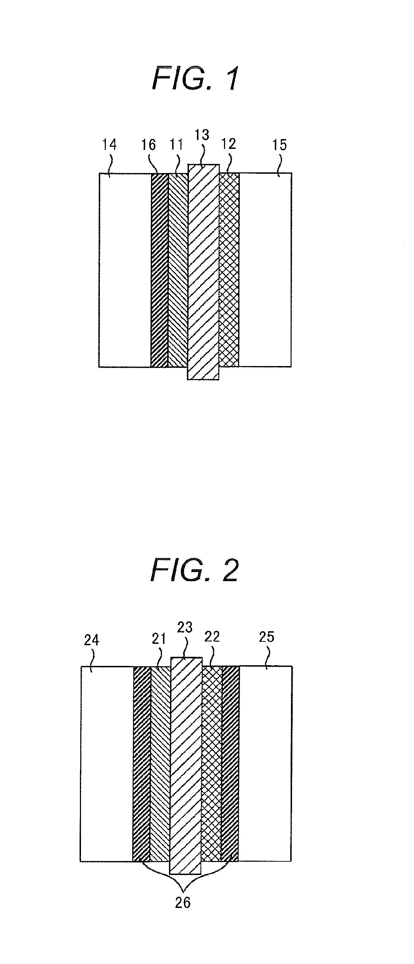

A schematic sectional view of a membrane electrode assembly for a fuel cell according to one embodiment of the present invention is shown in Fig. 1. An anode 11 and a cathode 12 are disposed on both sides of a solid polymer electrolyte membrane 13 respectively. A formic acid oxidation electrode 16 is disposed on one side of the anode 11 so as to be across the anode 11 from the solid polymer electrolyte membrane 13(namely the formic acid oxidation electrode is disposed on one side surface of the anode and on the one side opposite to another side in contact with the solid polymer electrolyte membrane 13). An anode gas diffusion layer 14 and a cathode gas diffusion layer 15 are disposed on both sides of the membrane electrode assembly respectively.

Here, methanol oxidation reaction represented by the expression (1) advances at the anode 11 and oxygen reduction reaction represented by the expression (2) advances at the cathode 12. In the methanol oxidation reaction advancing at the anode 11, a secondary reaction of producing formic acid represented by the expression (3) occurs not a little. The produced formic acid is oxidized as represented by the expression (4) at the formic acid oxidation electrode 16, and electrons and protons produced here are conveyed to the cathode 12 and contribute to the oxygen reduction reaction represented by the expression (2).

CH₃OH + H₂O → CO₂ + 6 H⁺ + 6 e⁻ (1)

3/2O₂ + 6H⁺ + 6e⁻ → 3H₂O (2)

CH₃OH + H₂O → HCOOH + 4H⁺ + 4e⁻ (3)

HCOOH → CO₂ + 2H⁺ + 2e⁻ (4)

Here, the anode 11 includes a catalyst and a solid polymer electrolyte. The catalyst included in the anode 11 is not particularly limited as long as it is a substance of promoting the oxidation reaction of a methanol aqueous solution as a fuel and one or more kinds selected from a group of platinum, ruthenium, iridium, rhodium, osmium, tungsten, molybdenum, iron, cobalt, nickel, manganese, etc. can be used. Otherwise, such a catalyst may also be a chemical compound such as carbide or nitride. The effect of promoting the methanol oxidation reaction is large particularly in the case of combining platinum and ruthenium and the combination is preferably used. Meanwhile, such a catalyst may be supported with a support having electron conductivity. As the support having electron conductivity, a carbon support excellent in corrosion resistance is preferably used. Here, the carbon support having a specific surface area of 10 m²/g or more is preferably used in order to sufficiently disperse a catalyst. For example, used as the carbon support is carbon black, carbonnanotube, carbon fiber, activated carbon, or the like.

Then, the cathode 12 also includes a catalyst and a solid polymer electrolyte. The catalyst contained in the cathode 12 is not particularly limited as long as it is a substance of promoting the reduction reaction of oxygen but platinum or a catalyst combining platinum and iron, cobalt, or nickel is preferably used. Further, such a catalyst may be supported with a support having electron conductivity in the same manner as the anode 11.

As a solid polymer electrolyte contained in the anode 11 and the cathode 12 and a solid polymer electrolyte used for the solid polymer electrolyte membrane 13, an acidic hydrogen ion conductive material is preferably used because it is not influenced by carbon dioxide gas in the atmosphere and a stable fuel cell can be obtained. As such a material, a sulfonated fluorinated-polymer represented by poly-perfluorostyrene sulfonic acid or perfluoro-carbon sulfonic acid, a material produced by sulfonating a hydrocarbon polymer such as poly-styrene sulfonic acid, poly-ether sulfone sulfonic acid, or polyether ether ketone sulfonic acid, or a material produced by alkyl-sulfonating a hydrocarbon polymer can be used. Here, the solid polymer electrolytes used for the anode 11, the cathode 12, and the solid polymer electrolyte membrane 13 may be an identical material or may be materials different from each other.

The anode gas diffusion layer 14 has a role of conducting electrons generated in electric generation and a role of equalizing the methanol aqueous solution in in-plane directions of the anode 11 and supplying it to the anode 11 and hence a porous material having electron conductivity is used for the anode gas diffusion layer. As such a porous material having conductivity, carbon paper or carbon cloth is used for example. Here, since the methanol aqueous solution has to be equalized in in-plane directions of the anode, the porosity of the anode gas diffusion layer is preferably 50% or more and yet preferably 70% or more.

The formic acid oxidation electrode 16 is an electrode that contains palladium and a solid polymer electrolyte and uses to oxidize formic acid produced at the anode 11 in a methanol oxidation process into carbon dioxide. Here, palladium functions as a formic acid oxidation catalyst and the solid polymer electrolyte has a function of conducting protons produced in a formic acid oxidation process. Palladium can be used in a state of not supported with a support, for example as a palladium black single body, but is preferably supported with a support having electron conductivity in a state of fine particles. This is because, by supporting palladium with the support, fine particles having particle sizes smaller than palladium black can be used and thus a specific surface area increases. Further, by supporting palladium with the support, palladium can be inhibited from deteriorating by aggregating, increasing in size, and thus reducing the specific surface area. Further, it is preferable to use a carbon support excellent in corrosion resistance as a support having electron conductivity. Here, a carbon support having a specific surface area of 10 m²/g or more is preferably used in order to sufficiently disperse palladium, and for example, the material used as the carbon support is carbon black, carbon nanotube, carbon fiber, activated carbon, or the like.

Further, it is preferable that the formic acid oxidation electrode 16 does not contain a catalyst such as platinum, ruthenium, iridium, rhodium, osmium, tungsten, molybdenum, iron, cobalt, nickel, manganese, or the like, those promoting methanol oxidation reaction, in particular a composite catalyst of platinum and ruthenium. If a catalyst promoting methanol oxidation reaction is contained in the formic acid oxidation electrode 16, the oxidation reaction of methanol occurs also here, formic acid is produced again as an intermediate product, and hence the effect of inhibiting formic acid from being discharged lowers. Here, palladium used as a formic acid oxidation catalyst scarcely functions as a catalyst for methanol oxidation reaction and hence formic acid is scarcely produced newly from palladium.

As a solid polymer electrolyte contained in the formic acid oxidation electrode 16, a material similar to the solid polymer electrolyte used for the anode 11, the cathode 12, and the solid polymer electrolyte membrane 13 can be used and the material may be a material identical to any one of them or may be a material different from them.

A largest effect of the formic acid oxidation electrode 16 can be obtained by disposing the formic acid electrode 16 between the anode 11 and the anode gas diffusion layer 14. If disposing the formic acid oxidation electrode 16 between the anode 11 and the solid polymer electrolyte membrane 13, it is not desirable because formic acid produced at the anode 11 is discharged outside without passing through the formic acid oxidation electrode 16. Further, if the formic acid oxidation electrode 16 is disposed on one side of the anode gas diffusion layer 14 so as to be across the anode gas diffusion from the anode 11, it is necessary to impregnate a solid polymer electrolyte into the anode gas diffusion layer 14 beforehand in order to use protons generated in the oxidation of formic acid for electric generation. This is not desirable however because the porosity of the anode gas diffusion layer decreases by the impregnation of the solid polymer electrolyte, the distance for conducting protons increases to the extent corresponding to the thickness of the anode gas diffusion layer 14, and conductance loss occurs. Further, if also impregnating palladium as a formic acid oxidation catalyst and a solid polymer electrolyte into the anode gas diffusion layer 14, the porosity of the anode gas diffusion layer 14 decreases undesirably. In the case of using palladium supported with a carbon support in particular, the porosity of the anode gas diffusion layer 14 decreases further undesirably.

A schematic sectional view of the other embodiment of a membrane electrode assembly for a fuel cell according to the present invention is shown in Fig. 2. An anode 21 and a cathode 22 are disposed on both sides of a solid polymer electrolyte membrane 23 respectively. Formic acid oxidation electrodes 26 are disposed on one side of the anode 21 so as to be across the anode 21 from the solid polymer electrolyte membrane 23 and on one side of the cathode 22 so as to be across the cathode 22 from the solid polymer electrolyte membrane 23 (namely the formic acid oxidation electrodes 26 are disposed on one side surface of the anode 21 and one side surface of the cathode and on the respective one side surfaces opposite to respective another side surfaces in contact with the solid polymer electrolyte membrane 23). An anode gas diffusion layer 24 and a cathode gas diffusion layer 25 are disposed on both sides of the membrane electrode assembly respectively.

A part of a methanol aqueous solution fed to the anode 21 moves to the cathode 22 through the solid polymer electrolyte membrane 23 and is oxidized at the cathode 22. Formic acid is undesirably produced from the part of the methanol aqueous solution in the process. By also disposing the formic acid oxidation electrode 26 between the cathode 22 and the cathode gas diffusion layer 25 as well as the anode 21 and the anode gas diffusion layer 24, it is possible to oxidize formic acid produced at the cathode 22 and inhibit the quantity of discharged formic acid.

Since the quantity of the produced formic acid is larger at an anode than at a cathode, when the formic acid oxidation electrode is formed at either of them, it is preferable to form it between the anode and the anode gas diffusion layer as shown in Fig. 1. Further, when formic acid oxidation electrodes are formed on both of the anode 21 and the cathode 22 as shown in Fig. 2, it is also possible to make the difference between the two thicknesses of the anode-side formic acid oxidation electrode and the cathode-side formic acid oxidation electrode and make the difference between the two contents of palladium at those formic acid oxidation electrodes in accordance with the quantities of the produced formic acid between the anode side and the cathode side. More specifically, it is preferable to reduce the thickness of the formic acid oxidation electrode or reduce the content of palladium on the cathode side than on the anode side.

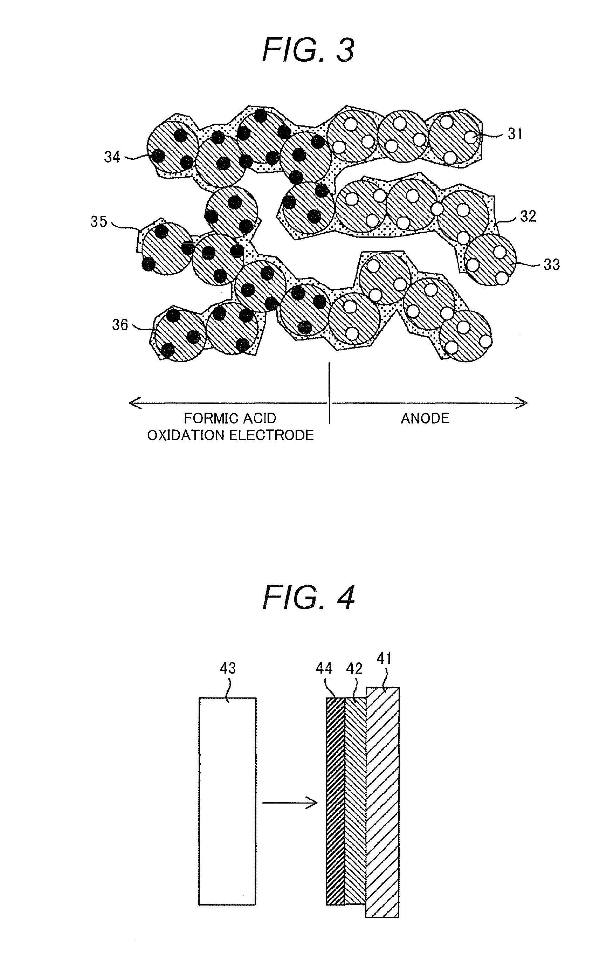

Fig 3 shows an enlarged schematic sectional view of an interface between the anode and the formic acid oxidation electrode formed between the anode and the anode gas diffusion layer in the membrane electrode assembly for the fuel cell according to the present invention. The anode includes carbon black 33, a methanol oxidation catalyst 31 supported thereover, and a solid polymer electrolyte 32 around them. The formic acid oxidation electrode includes carbon black 36, palladium 34 supported thereover, and a solidpolymer electrolyte 35 around them. The methanol aqueous solution fed from the side of the anode gas diffusion layer passes through the formic acid oxidization electrode and reaches the anode, and then oxidized to carbon dioxide on the methanol oxidation catalyst 31. However a part of the methanol aqueous is oxidized only to formic acid. Such formic acid is returns to the formic acid oxidization electrode together with the unreacted methanol aqueous solution. Here, formic acid is oxidized, is consumed, and turns into carbon dioxide on palladium 34 in the formic acid oxidization electrode and hence the quantity of formic acid discharged from a fuel cell can be reduced.

Here, since the formic acid oxidization electrode contains carbon black 36 having electron conductivity and a solid polymer electrolyte 35 having proton conductivity, electrons and protons produced during the oxidation of formic acid contribute to the electric generation of a fuel cell. Consequently, according to the membrane electrode assembly for the fuel cell of the present invention, in addition to electric power obtained by the oxidation of the methanol aqueous solution at the anode, electric power generated by the oxidation of formic acid at the formic acid oxidation electrode on the anode side can be obtained and hence it is possible to improve the efficiency of the fuel cell.

Further, even when a catalyst that produces a large quantity of formic acid in the event of the oxidation of methanol is used as the methanol oxidation catalyst 31, by adopting a configuration according to the present invention, it is possible to inhibit the quantity of discharged formic acid. Further, since electric power is obtained also in the process of oxidizing formic acid, it is possible to generate electricity without large drop in efficiency.

The quantity of palladium contained in the formic acid oxidation electrode is not particularly limited but the mass of palladium per a projected area of a formic acid oxidation electrode is preferably 0.01 mg/cm² or more and yet preferably 0.1 mg/cm² or more. If the quantity of palladium contained in the formic acid oxidation electrode is too small, efficiency of oxidizing formic acid lowers. Further, the thickness of the formic acid oxidation electrode is not particularly limited but is preferably in a range of 1 to 100 µm. If the thickness of the formic acid oxidation electrode is too thin, formic acid passes through before it is oxidized on the palladium and efficiency of inhibiting formic acid from discharging lowers.

On the other hand, if the thickness of the formic acid oxidation electrode is too heavy, diffusibility for methanol aqueous and oxygen lowers and sufficient quantities of the methanol aqueous solution and oxygen are not fed to the anode and a cathode, which is undesirable. When using the carbon support, in order to obtain such a configuration, it is necessary to use a catalyst containing palladium by 0.3 wt% or preferably 3 wt% or more. The quantity of the solid polymer electrolyte contained in the formic acid oxidation electrode is not particularly limited but the mass of the solid polymer electrolyte per unit volume of the formic acid oxidation electrode is preferably in a range of 0.01 to 1 g/cm³ and yet preferably in a range of 0.05 to 0.5 g/cm³. If the quantity of the solid polymer electrolyte is too small, proton conductivity lowers and the conduction resistance of protons produced when the formic acid is oxidized increases undesirably. In contrast, if the quantity of the solid polymer electrolyte is too large, pores in the formic acid oxidation electrode are filled with the solid polymer electrolyte, and thereby the methanol aqueous solution and oxygen come to be supplied insufficiently to the anode and the cathode undesirably.

Here, explanation will be done about procedures of forming the formic acid oxidation electrode between the anode and the anode gas diffusion layer on the basis of the case of forming it on the anode side. The procedures are not particularly limited to the case. Fig. 4 shows a schematic view of procedures in forming the membrane electrode assembly for the fuel cell according to the present invention. Firstly, an anode 42 is formed on a solid polymer electrolyte membrane 41 and a formic acid oxidation electrode 44 is formed on one side of the anode 42. Successively, by stacking an anode gas diffusion layer 43 with the formic acid oxidation electrode 44, a membrane electrode assembly for a fuel cell according to the present invention can be obtained. Here, as a method of forming the anode 42 on the solid polymer electrolyte membrane 41 for example, proposed is the method of forming it by producing slurry by mixing a catalyst or a catalyst supported with a carbon support, a solid polymer electrolyte, and alcohol and applying the slurry on one side of the solid polymer electrolyte membrane 41 by spray coating. Further, as a method of forming the formic acid oxidation electrode 44 on the anode 42 for example, proposed is the method of forming it by producing slurry by mixing palladium or palladium supported with a carbon support, a solid polymer electrolyte, and alcohol and applying the slurry on one side of the anode 42 by spray coating.

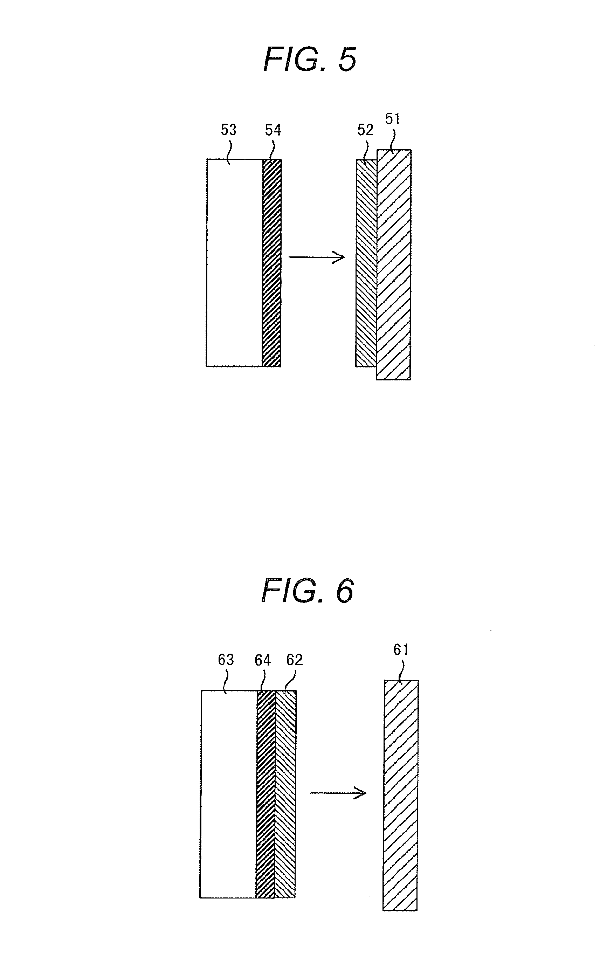

Fig. 5 shows a schematic view of other procedures in forming a membrane electrode assembly for a fuel cell according to the present invention. Firstly, an anode 52 is formed on one side of a solid polymer electrolyte membrane 51. Successively, a formic acid oxidation electrode 54 is formed on one side of an anode gas diffusion layer 53, and then, by stacking the layered of the formic acid oxidation electrode 54 and the anode gas diffusion layer 53 with the anode 52 so that the formic acid oxidation electrode 54 is in contact with the anode 52, a membrane electrode assembly for a fuel cell according to the present invention can be obtained.

Fig. 6 shows a schematic view of yet other procedures in forming a membrane electrode assembly for a fuel cell according to the present invention. Firstly, a formic acid oxidation electrode 64 is formed on one side of an anode gas diffusion layer 63. Successively, an anode 62 is formed on one side of the formic acid oxidation electrode 64, and then, by stacking the layered of the anode 62, the formic acid oxidation electrode 64 and the anode gas diffusion layer 63 with one side of a solid polymer electrolyte membrane 61 so that the anode 62 is in contact with the solid polymer electrolyte membrane 61, a membrane electrode assembly for a fuel cell according to the present invention can be obtained.

Here, although the case of forming on the anode side is exemplified above, it is also possible to form a formic acid oxidation electrode between a cathode and a cathode gas diffusion layer in the case of forming on the cathode side likewise.

Embodiments of a membrane electrode assembly for a fuel cell according to the present invention are hereunder explained more specifically on the basis of examples.

### (Example 1)

In the present example, produced is the membrane electrode assembly for the fuel cell shown in Fig.

Slurry for the anode is produced by mixing platinum ruthenium supported with carbon black, Nafion (registered trademark of Dupont) as the solidpolymer electrolyte, propanol, and water, and then the slurry is stirred for 24 hours with a stirrer. Further, slurry for the formic acid oxidation electrode is produced by mixing palladium supported with carbon black, Nafion, propanol, and water, and then the slurry is stirred for 24 hours with a stirrer. Furthermore, slurry for the cathode is produced by mixing platinum supported with carbon black, Nafion, propanol, and water, and then the slurry is stirred for 24 hours with a stirrer.

The slurry for the anode is applied to one side of the solid polymer electrolyte membrane by spray coating, and the slurry for the formic acid oxidation electrode is applied to one side of the anode so that the mass of palladium may be 0.2 mg/cm² per unit electrode projected area. Successively, the slurry for the cathode is applied to another side of the solid polymer electrolyte membrane by spray coating, and hot press is applied to the layered of them at 120°C. Here, sulfonated poly-ether sulfone is used as the solid polymer electrolyte membrane. And then, a carbon paper as the anode gas diffusion layer and a carbon cloth as the cathode gas diffusion layer are stacked with the layered of them respectively and thus the membrane electrode assembly for the fuel cell according to the present example is obtained.

With respect to such a membrane electrode assembly, from the result of cross-sectional observation, each of the thicknesses of the anode, the cathode, and the formic acid oxidation electrode of the membrane electrode assembly for the fuel cell obtained is about 20 µm.

### (Example 2)

In the present example, produces is the membrane electrode assembly for a fuel cell shown in Fig. 2 is produced.

Firstly, in the same manner as Example 1, slurry for the anode, slurry for the formic acid oxidation electrode, and slurry for the cathode are produced and stirred for 24 hours with a stirrer respectively.

The slurry for the anode is applied to one side of the solid polymer electrolyte membrane by spray coating, and the slurry for the formic acid oxidation electrode is applied to one side of the anode by spray coating so that the mass of palladium may be 0.2 mg/cm² per unit electrode projected area. Successively, the slurry for the cathode is applied to another side of the solid polymer electrolyte membrane by spray coating, the slurry for the formic acid oxidation electrode is applied to one side of the anode and one side of the cathode by spray coating and then hot press is applied to the layered of them at 120°C. Here, in the same manner as Example 1, sulfonated poly-ether sulfone is used as the solid polymer electrolyte membrane. And then, a carbon paper as the anode gas diffusion layer and a carbon cloth as the cathode gas diffusion layer are stacked with the layered of them respectively and thus the membrane electrode assembly for the fuel cell according to the present example is obtained.

With respect to such a membrane electrode assembly, from the result of cross-sectional observation, each of the thicknesses of the anode, the cathode, and the formic acid oxidation electrode of the membrane electrode assembly for the fuel cell obtained is about 20 µm.

### (Comparative Example 1)

In the present comparative example, produced is a membrane electrode assembly for a fuel cell not having a formic acid oxidation electrode.

Firstly, in the same manner as Example 1, slurry for an anode and slurry for a cathode are produced and stirred for 24 hours with a stirrer respectively.

The slurry for the anode is applied to one side of a solid polymer electrolyte membrane by spray coating, and the slurry for the cathode is applied to another side of the solid polymer electrolyte membrane by spray coating. Successively, hotpress is applied to the layered of them at 120°C. Here, in the same manner as Example 1, sulfonated poly-ether sulfone is used as the solid polymer electrolyte membrane. And then, a carbon paper as an anode gas diffusion layer and a carbon cloth as a cathode gas diffusion layer are stacked with the layered of them respectively and thus a membrane electrode assembly for a fuel cell according to the present comparative example is obtained.

With respect to such a membrane electrode assembly, from the result of cross-sectional observation, each of the thicknesses of the anode and the cathode of the membrane electrode assembly for a fuel cell obtained is about 20 µm.

### (Evaluation)

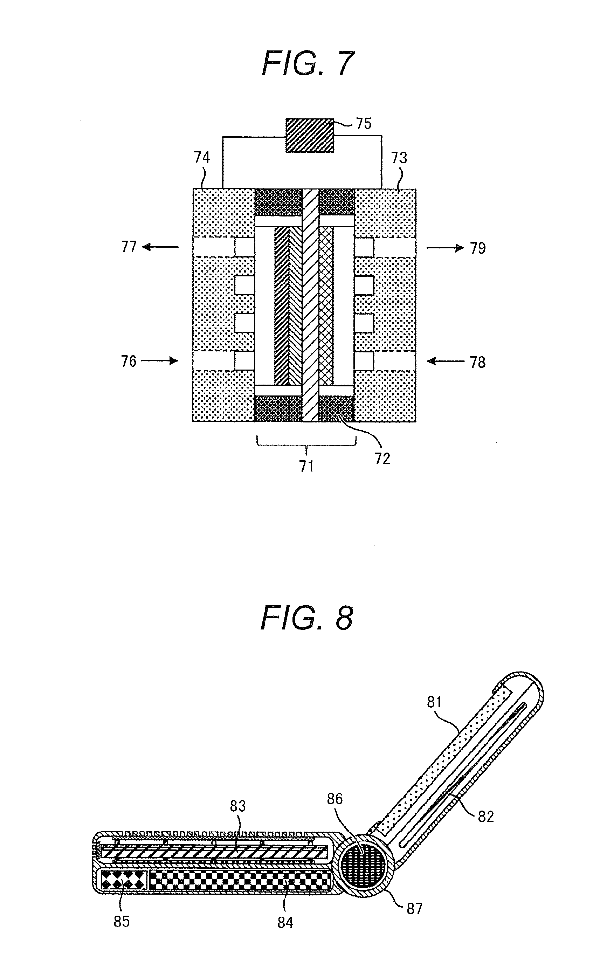

Each of membrane electrode assemblies for fuel cells is incorporated into a fuel cell shown in Fig. 7 and the quantity of discharged formic acid is evaluated. An anode collector 74 is stacked with an anode gas diffusion layer of a membrane electrode assembly 71 for a fuel cell according to the present example, a cathode collector 73 is stacked with a cathode gas diffusion layer, and the anode collector 74 and the cathode collector 73 are connected to an external circuit 75. A gasket 72 is disposed between the membrane electrode assembly 71 for the fuel cell and the anode collector 74/the cathode collector 73. On the anode side, a methanol aqueous solution 76 is fed to the anode, and a waste liquid 77 containing carbon dioxide and an unreacted methanol aqueous solution is discharged. Further, on the cathode side, oxygen or air 78 is fed to the cathode, and an exhaust gas 79 containing water is discharged.

Here, the size of the electrode of each of the membrane electrode assemblies for fuel cells used for evaluation is 25 cm ² The quantity of each discharged formic acid is obtained by collecting a discharged methanol aqueous solution and an exhaust gas in iced water and measuring the formic acid contained in the iced water with ion chromatography. The fed methanol aqueous solution is an aqueous solution containing methanol by 3 wt%, and air having a relative humidity of 60% is fed to the cathode. Further, the cell temperature is set at 60°C and the load current density is set at 150 mA/cm². The results are shown in Table 1.

**[Table 1]**

| Membrane electrode assembly for fuel cell | Discharged formic acid quantity (mg/hr) |
|---|---|
| Example 1 | 4 |
| Example 2 | 2 |
| Comparative example 1 | 41 |

The quantity of discharged formic acid in the case of the membrane electrode assembly for the fuel cell according to Example 1 is small and about 1/10 of that in the case of the membrane electrode assembly for the fuel cell according to Comparative Example 1. Further, the quantity of discharged formic acid in the case of the membrane electrode assembly for the fuel cell according to Example 2 is smaller than that of Example 1 and about 1/2 of that in the case of the membrane electrode assembly for the fuel cell according to Example 1.

A case of mounting a produced fuel cell on a personal digital assistant as an example of a fuel cell electric generation system is shown in Fig. 8. The personal digital assistant has a foldable structure formed by coupling two parts with a hinge 87 used also as a holder of a fuel cartridge 86. One part includes a display device 81 into which a touch-panel type input device is integrated and a part where an antenna 82 is built-in. The other part includes a fuel cell 83, a mainboard 84 on which electronic devices and electronic circuits such as a processor, volatile and nonvolatile memories, an electric power controller, a fuel cell and secondary cell hybrid controller and a fuel monitor are mounted, and a part on which a lithium ion secondary cell 85 is mounted. With a personal digital assistant obtained in this manner, the quantity of formic acid discharged from the fuel cell is small and hence the quantity of formic acid discharged from the fuel cell system can also be reduced.

The present invention relates to a membrane electrode assembly used in a fuel cell and such a membrane electrode assembly can be used for a direct methanol fuel cell.

## Claims

1. A membrane electrode assembly for a fuel cell comprising a solid polymer electrolyte membrane (13), an anode (11) being formed on one side of the solid polymer electrolyte membrane (13) and containing a catalyst and a solid polymer electrolyte, a cathode (12) being formed on another side of the solid polymer electrolyte membrane (13) and containing a catalyst and a solid polymer electrolyte, an anode gas diffusion layer (14) formed on one side of the anode so as to be across the anode from the solid polymer electrolyte membrane (13), and a cathode gas diffusion layer (15) formed on one side of the cathode so as to be across the cathode from the solid polymer electrolyte membrane (13),
wherein a formic acid oxidation electrode (16) containing palladium and a solid polymer electrolyte is formed between the anode gas diffusion layer (14) and the anode.

2. The membrane electrode assembly for the fuel cell according to claim 1, wherein:
the catalyst contained in the anode is one or more kinds selected from a group of platinum, ruthenium, iridium, rhodium, osmium, tungsten, molybdenum, iron, cobalt, nickel, and manganese; and
the formic acid oxidation electrode (16) does not contain platinum, ruthenium, iridium, rhodium, osmium, tungsten, molybdenum, iron, cobalt, nickel or manganese.

3. The membrane electrode assembly for the fuel cell according to Claim 1 or 2, wherein the formic acid oxidation electrode (16) is formed between the anode gas diffusion layer (14) and the anode and between the cathode gas diffusion layer (15) and the cathode.

4. The membrane electrode assembly for the fuel cell according to one of the preceding claims, wherein the formic acid oxidation electrode (16) includes palladium supported with a carbon support and a solid polymer electrolyte.

5. A fuel cell having the membrane electrode assembly according to one of the preceding claims, a member for feeding a fuel containing an organic substance, a member for feeding oxygen, and a collecting member.

6. The fuel cell according to Claim 5, wherein the fuel is an aqueous solution containing methanol.

7. A fuel cell electric generation system on which the fuel cell according to Claim 6 is mounted.
